# EUROPEAN PATENT APPLICATION

(11) **EP 4 607 620 A1**
(43) Date of publication of application: **27.08.2025**
(21) Application number: 24842230.5
(22) Date of filing: 08.07.2024
(51) Int. Cl.: H01M 4/58, H01M 4/583, H01M 4/62, H01M 10/0525

(54) **TIN-CARBON COMPOSITE MATERIAL AND PREPARATION METHOD THEREFOR**

(30) Priority: 17.07.2023 CN 202310870720
(71) Applicant: Natfound Technology Co., Ltd., Yueyang, Hunan 414000 (CN)
(72) Inventor: YAO, Huandong, Yueyang, Hunan 414000 (CN); TU, Jian, Yueyang, Hunan 414000 (CN); XU, Xiongwen, Yueyang, Hunan 414000 (CN); WANG, Zhibin, Yueyang, Hunan 414000 (CN)
(74) Representative: Petraz, Gilberto Luigi
(86) International application number: PCT/CN2024/104160
(87) International publication number: WO 2025/016235

(57) **Abstract**

The present invention discloses a tin-carbon composite material and a preparation method therefor. The tin-carbon composite material includes a tin-based compound and a hollow carbon having a nitrogen-doped inner surface. The tin-based compound is evenly distributed inside the hollow carbon having a nitrogen-doped inner surface to effectively inhibit the volume expansion of the tin-based compound in the cyclic process of sodium storage and removal and to solve the crushing problem caused by the uneven dispersion of active substances, thus effectively enhancing the cycle life and safety performance of sodium-ion batteries. Moreover, the present invention greatly increases the energy density of the sodium-ion batteries by using the tin-based compound with a high specific capacity.

## Description

### TECHNICAL FIELD

The present invention relates to the technical field of sodium-ion batteries, and specifically relates to a tin-carbon composite material, and a preparation method therefor.

### BACKGROUND

Currently, with the advantages such as large interlayer spacing, rich pores, low charging potential, small volume expansion ratio, and high sodium storage capacity, hard carbon has become the preferred negative-electrode material of a sodium-ion battery. Nevertheless, even though hard carbon exhibits good structure stability and long cycle life in the process of sodium storage, low operating voltage and theoretical specific capacity limit its application in high-energy density scenes.

Due to the advantages such as controllable structure, high theoretical specific capacity and low costs, tin-based compounds have been concerned by people extensively. However, in practical application, there exist problems in tin-based compounds such as serious volume expansion, more side reactions, and poor electronic conductivity. Placing a tin-based compound having a high volume expansion ratio into a hollow carbon is an effective structural design. However, the unevenly-dispersed tin-based compound is prone to aggregation, thus leading to the crushing of active substances caused by the stress concentration during sodium storage and removal to seriously affect the exertion of the electrochemical performance.

### SUMMARY

The objective of the present invention is to provide a tin-carbon composite material. An element nitrogen is doped on the inner surface of a hollow carbon such that a tin-based compound is evenly anchored inside the hollow carbon, which effectively inhibits the volume expansion of the tin-based compound in the cyclic process of sodium storage and removal and solves the crushing problem caused by the uneven dispersion of active substances, thereby effectively improving the cycle life and safety performance of sodium-ion batteries.

To achieve the above objective, the present invention adopts the following technical solution:
A tin-carbon composite material, including a tin-based compound and a hollow carbon having a nitrogen-doped inner surface; the tin-based compound is evenly distributed inside the hollow carbon having a nitrogen-doped inner surface.

The present invention further provides a method for preparing a tin-carbon composite material, including the following steps:
(1) adding ethyl orthosilicate to an aqueous ethanol solution and mixing well, and then adding dopamine, a tris(hydroxymethyl)aminomethane buffer solution, a phenolic resin, and ammonia water in sequence, and mixing well to obtain a mixture A;
(2) performing centrifugal washing on the mixture A obtained in step (1) with deionized water and drying, and then performing high-temperature carbonization under nitrogen to obtain a mixture B;
(3) putting the mixture B to a sodium hydroxide solution for soaking, and performing centrifugal washing with deionized water and drying to obtain a hollow carbon having a nitrogen-doped inner surface;
(4) adding the hollow carbon having a nitrogen-doped inner surface obtained in step (3) to an aqueous ethanol solution and mixing well, and adding a tin-containing substance and mixing well to obtain a mixture C; and
(5) adding a sulfur-containing or selenium-containing substance to the mixture C and mixing well, performing a high-temperature reaction, and then washing with deionized water and drying, to obtain the tin-carbon composite material.

Preferably, in step (1), a mass ratio of ethanol in the aqueous ethanol solution to the deionized water is 1:5-5:1; a mass ratio of the ethyl orthosilicate to the aqueous ethanol solution is 1:10-1:30; a mass ratio of the dopamine to the ethyl orthosilicate is 1:1-1:10; a mass ratio of tris(hydroxymethyl)aminomethane in the tris(hydroxymethyl)aminomethane buffer solution to the ethyl orthosilicate is 1:20-1:50; a mass ratio of the phenolic resin to the ethyl orthosilicate is 1:1-1:10; and a mass ratio of ammonia in the ammonia water to the ethyl orthosilicate is 1:3-1: 10.

Preferably, in step (2), the high-temperature carbonization is performed at a temperature of 500°C-1000°C.

Preferably, in step (4), a mass ratio of ethanol in the aqueous ethanol solution to the deionized water is 1:5-5:1; and a mass ratio of the tin-containing substance to the hollow carbon having a nitrogen-doped inner surface is 1:5-5:1.

Preferably, in step (5), a mass ratio of the sulfur-containing substance to the hollow carbon having a nitrogen-doped inner surface is 1:5-5:1; a mass ratio of the selenium-containing substance to the hollow carbon having a nitrogen-doped inner surface is 1:5-5:1; and the high-temperature reaction is performed at a temperature of 100°C-200°C.

Preferably, the tin-containing substance is at least one of stannous chloride, stannous octoate, stannous acetate, tin tetrachloride, and tin nitrate; the sulfur-containing substance is at least one of thiourea, thioacetamide, sodium sulfide, sodium sulfite, and sulfur powder; and the selenium-containing substance is at least one of selenium dioxide, selenium chloride, sodium selenite, and selenium powder.

The present invention further provides a method for preparing a tin-carbon composite material, including the following steps:
(1) adding a zeolitic imidazolate framework material to an aqueous ethanol solution and mixing well, and adding a phenolic resin and mixing well to obtain a mixture A;
(2) performing centrifugal washing on the mixture A with deionized water and drying, then performing high-temperature carbonization under nitrogen, then performing centrifugal washing with deionized water and drying to obtain a hollow carbon having a nitrogen-doped inner surface;
(3) adding the hollow carbon having a nitrogen-doped inner surface obtained in step (2) to an aqueous ethanol solution and mixing well, and adding a tin-containing substance and mixing well to obtain a mixture B; and
(4) adding a sulfur-containing or selenium-containing substance to the mixture B and mixing well, performing a high-temperature reaction, then washing with deionized water and drying to obtain the tin-carbon composite material.

Preferably, in step (1), a mass ratio of ethanol in the aqueous ethanol solution to the deionized water is 1:5-5:1; and a mass ratio of the zeolitic imidazolate framework material to the aqueous ethanol solution is 1:10-1:30; and a mass ratio of the phenolic resin to the zeolitic imidazolate framework material is 1:1-1:10.

Preferably, the zeolitic imidazolate framework material is least one of ZIF-8 (zeolitic imidazolate framework-8) and ZIF-68 (zeolitic imidazolate framework-68); the tin-containing substance is at least one of stannous chloride, stannous octoate, stannous acetate, tin tetrachloride, and tin nitrate; the sulfur-containing substance is at least one of thiourea, thioacetamide, sodium sulfide, sodium sulfite, and sulfur powder; and the selenium-containing substance is at least one of selenium dioxide, selenium chloride, sodium selenite, and selenium powder.

Preferably, in step (2), the high-temperature carbonization is performed at a temperature of 800°C-1,500°C.

Preferably, in step (3), a mass ratio of ethanol in the aqueous ethanol solution to the deionized water is 1:5-5:1; and a mass ratio of the tin-containing substance to the hollow carbon having a nitrogen-doped inner surface is 1:5-5:1.

Preferably, in step (4), a mass ratio of the sulfur-containing substance to the hollow carbon having a nitrogen-doped inner surface is 1:5-5:1; a mass ratio of the selenium-containing substance to the hollow carbon having a nitrogen-doped inner surface is 1:5-5:1, and the high-temperature reaction is performed at a temperature of 100°C-200°C.

The present invention further provides a negative-electrode plate, including a negative-electrode active substance, a binder, and a conductive agent; the negative-electrode active substance is the aforesaid tin-carbon composite material.

The present invention further provides a sodium-ion battery, including a positive-electrode plate, a negative-electrode plate, and a separator spaced between the positive-electrode plate and the negative-electrode plate, and the negative-electrode plate is the aforesaid negative-electrode plate.

The advantageous effects of the present invention are as follows: the element nitrogen is doped into a hollow carbon in the present invention such that the tin-based compound is evenly anchored inside the hollow carbon, which effectively inhibits the volume expansion of the tin-based compound in the cyclic process of sodium storage and removal and solves the crushing problem caused by the uneven dispersion of active substances, thereby effectively improving the cycle life and safety performance of sodium-ion batteries. Moreover, the energy density of the sodium-ion battery is greatly enhanced by the tin-based compound with a high specific capacity.

### BRIEF DESCRIPTION OF DRAWINGS

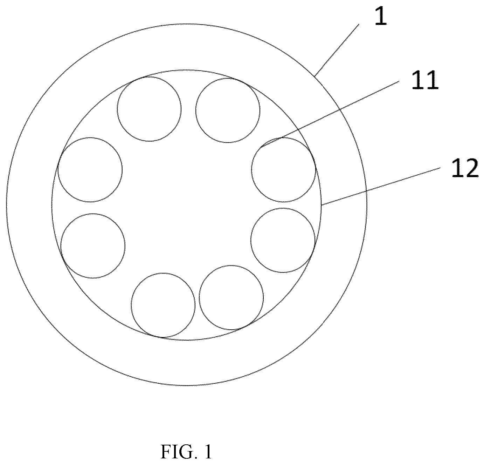

FIG. 1 is a schematic diagram showing a structure of a tin-carbon composite material in an example of the present invention; where
1-tin-carbon composite material; 11-tin-based compound; and 12-hollow carbon having a nitrogen-doped inner surface.

### DETAILED DESCRIPTION OF EMBODIMENTS

To make the technical solutions and advantages of the present invention clearer, the technical solutions of the present invention will be described clearly and completely in combination with detailed examples. Obviously, the described examples are merely a part of, but are not all the embodiments of the present invention. Based on the examples of the present invention, all the other examples obtained by those skilled in the art without any inventive effort fall within the scope of protection of the present invention.

According to a first aspect of the present invention, the present invention provides a tin-carbon composite material, including a tin-based compound and a hollow carbon having a nitrogen-doped inner surface; the tin-based compound is evenly distributed inside the hollow carbon having a nitrogen-doped inner surface.

Compared with hard carbon, the tin-carbon composite material of the present invention has an obviously increased capacity per gram, thus increasing the energy density of the sodium-ion battery. When the tin-based compound is distributed into the hollow carbon evenly, the hollow carbon not only effectively inhibits the volume expansion of the tin-based compound, but also avoids the crushing problem of the active substances caused by stress concentration due to uneven dispersion, thereby effectively improving the cycle life of the sodium-ion battery. When the tin-based compound is distributed into and on the surface of the hollow carbon simultaneously, the volume expansion of the tin-based compound on the outer surface of the hollow carbon will cause the crushing of the active substances in the cyclic process of sodium storage and removal, thereby affecting the exertion of the electrochemical performance.

According to a second aspect of the present invention, the present invention further provides a method for preparing a tin-carbon composite material, including the following steps:
(1) adding ethyl orthosilicate to an aqueous ethanol solution and mixing well, and then adding dopamine, a tris(hydroxymethyl)aminomethane buffer solution, a phenolic resin, and ammonia water in sequence, and mixing well to obtain a mixture A;
(2) performing centrifugal washing on the mixture A obtained in step (1) with deionized water and drying, and then performing high-temperature carbonization under nitrogen to obtain a mixture B;
(3) putting the mixture B to a sodium hydroxide solution for soaking, and performing centrifugal washing with deionized water and drying to obtain a hollow carbon having a nitrogen-doped inner surface;
(4) adding the hollow carbon having a nitrogen-doped inner surface obtained in step (3) to an aqueous ethanol solution and mixing well, and adding a tin-containing substance and mixing well to obtain a mixture C; and
(5) adding a sulfur-containing or selenium-containing substance to the mixture C and mixing well, performing a high-temperature reaction, and then washing with deionized water and drying, to obtain the tin-carbon composite material.

The reaction mechanism of the aforesaid method for preparing the tin-carbon composite material of the present invention is as follows: ethyl orthosilicate is hydrolyzed into silicon dioxide, and dopamine containing element nitrogen in molecules is wrapped on the surface of the silicon dioxide, then the dopamine is catalyzed by the tris(hydroxymethyl)aminomethane to be synthesized to polydopamine, and the phenolic resin is wrapped on the surface of the polydopamine via the non-covalent interaction between the phenolic resin and the polydopamine; ammonia water serves as a catalyst such that unhydrolyzed ethyl orthosilicate is hydrolyzed completely. After the high-temperature carbonization, the polydopamine generates a carbon framework doped with element nitrogen, and the phenolic resin generates a carbon framework wrapped outside; and then sodium hydroxide is reacted with silicon dioxide to generate sodium silicate freely soluble in water; the sodium silicate is dissolved into water to form a hollow carbon material, i.e., the hollow carbon having a nitrogen-doped inner surface.

According to an embodiment of the present invention, in step (1), a mass ratio of ethanol in the aqueous ethanol solution to the deionized water is 1:5-5:1, and specifically may be 1:5, 1:4, 1:3, 1:2, 1:1, 2:1, 3:1, 4:1, and 5:1; the mass ratio may include but not limited to the listed values, and preferably be 1:1. The mass ratio of ethanol in the aqueous ethanol to the deionized water is controlled within the aforesaid scope, which is beneficial to the dissolving of the water-soluble dopamine and sodium silicate as well as the alcohol-soluble ethyl orthosilicate and phenolic resin. If the mass ratio is beyond the aforesaid scope, there exists an incompletely dissolved phenomenon, thus causing the loss of raw materials and affecting the performance of the tin-carbon composite material in sodium-ion batteries.

According to an embodiment of the present invention, in step (1), a mass ratio of the ethyl orthosilicate to the aqueous ethanol solution is 1:10-1:30, and specifically may be 1:10, 1:15, 1:20, and 1:30; the mass ratio may include but not limited to the listed values, and preferably be 1:10. The mass ratio of the ethyl orthosilicate to the aqueous ethanol solution is controlled within the aforesaid scope, which is beneficial to the dissolving of the ethyl orthosilicate. Too much ethyl orthosilicate will result in a too high dissolving concentration to go against the hydrolysis of ethyl orthosilicate; while too little ethyl orthosilicate will result in a too low concentration to cause solvent waste.

According to an embodiment of the present invention, in step (1), a mass ratio of the dopamine to the ethyl orthosilicate is 1:1-1:10, and specifically may be 1:1, 1:2, 1:3, 1:4, 1:5, 1:6, 1:7, 1:8, 1:9, and 1:10; the mass ratio may include but not limited to the listed values, and preferably be 1:5. The mass ratio of the dopamine to the ethyl orthosilicate is controlled within the aforesaid scope, which facilitates that the dopamine is wrapped on the surface of silicon dioxide hydrolyzed from ethyl orthosilicate in a certain thickness. Too small thickness will result in the shortage of the element nitrogen, while too large thickness will result in the reduced utilization efficiency of the element nitrogen.

According to an embodiment of the present invention, in step (1), a mass ratio of tris(hydroxymethyl)aminomethane in the tris(hydroxymethyl)aminomethane buffer solution to the ethyl orthosilicate is 1:20-1:50, and specifically may be 1:20, 1:25, 1:30, 1:35, 1:40, 1:45, and 1:50; the mass ratio may include but not limited to the listed values, and preferably be 1:35. The mass ratio of the tris(hydroxymethyl)aminomethane in the tris(hydroxymethyl)aminomethane buffer solution to the ethyl orthosilicate is controlled within the aforesaid scope, which facilitates that the dopamine is polymerized into polydopamine. Too little tris(hydroxymethyl)aminomethane will result in a slow polymerization rate, while too much tris(hydroxymethyl)aminomethane will introduce more impurities.

According to an embodiment of the present invention, in step (1), the mass ratio of the phenolic resin to the ethyl orthosilicate is 1:1-1:10, and specifically may be 1:1, 1:2, 1:3, 1:4, 1:5, 1:6, 1:7, 1:8, 1:9, and 1:10; the mass ratio may include but not limited to the listed values, and preferably be 1:5. The mass ratio of the phenolic resin to the ethyl orthosilicate is controlled within the aforesaid scope, which facilitates that the phenolic resin is wrapped on the surface of silicon dioxide hydrolyzed from ethyl orthosilicate in a certain thickness. Too small thickness will result in the inadequate strength of the carbon framework, while too large thickness will go against the improvement of the energy density of the negative electrode.

According to an embodiment of the present invention, in step (1), the mass ratio of ammonia in the ammonia water to the ethyl orthosilicate is 1:3-1:10, and specifically may be 1:3, 1:4, 1:5, 1:6, 1:7, 1:8, 1:9, and 1:10; the mass ratio may include but not limited to the listed values, and preferably be 1:7. The mass ratio of the ammonia in the ammonia water to the ethyl orthosilicate is controlled within the aforesaid scope, which facilitates that the ethyl orthosilicate is dissolved completely; too little ammonia water will result in a too slow rate of hydrolysis, and too much ammonia water will result in the waste of the ammonia water.

According to an embodiment of the present invention, in step (2), the high-temperature carbonization is performed at a temperature of 500°C-1000°C, and specifically 500°C, 550°C, 600°C, 650°C, 700°C, 750°C, 800°C, 850°C, 900°C, 950°C, 1000°C, and preferably 500°C. The high-temperature carbonization is controlled within the aforesaid range to facilitate the carbonization of the polydopamine and phenolic resin; if it is lower than the temperature, carbonization is incomplete, and if it is higher than the temperature, it is against the pore formation of the carbon framework.

According to an embodiment of the present invention, in step (4), a mass ratio of ethanol in the aqueous ethanol solution to the deionized water is 1:5-5:1, and specifically may be 1:5, 1:4, 1:3, 1:2, 1:1, 2:1, 3:1, 4:1, and 5:1; the mass ratio may include but not limited to the listed values, and preferably be 1:1. The mass ratio of ethanol in the aqueous ethanol solution to the deionized water is controlled within the aforesaid scope, which is beneficial to the dissolving of the water-soluble and alcohol-soluble substances.

According to an embodiment of the present invention, in step (4), a mass ratio of the tin-containing substance to the hollow carbon having a nitrogen-doped inner surface is 1:5-5:1, and specifically may be 1:5, 1:4, 1:3, 1:2, 1:1, 2:1, 3:1, 4:1, and 5:1; the mass ratio may include but not limited to the listed values, and preferably be 1:1. When the mass ratio of the tin-containing substance to the hollow carbon having a nitrogen-doped inner surface is controlled within the aforesaid scope, the tin-containing substance may be evenly distributed into the hollow carbon having a nitrogen-doped inner surface, thus enhancing the performance of the material.

According to an embodiment of the present invention, in step (5), a mass ratio of the sulfur-containing substance to the hollow carbon having a nitrogen-doped inner surface is 1:5-5:1, and specifically may be 1:5, 1:4, 1:3, 1:2, 1:1, 2:1, 3:1, 4:1, and 5:1; the mass ratio may include but not limited to the listed values, and preferably be 1:1. The mass ratio of the sulfur-containing substance to the hollow carbon having a nitrogen-doped inner surface is controlled within the aforesaid scope, which is beneficial to the reaction between the sulfur-containing and tin-containing substances. Too little sulfur-containing substance will result in the insufficient sulfidation of the tin-containing substance, while too much sulfur-containing substance will result in the failure of the full utilization of the sulfur-containing substance.

According to an embodiment of the present invention, in step (5), a mass ratio of the selenium-containing substance to the hollow carbon having a nitrogen-doped inner surface is 1:5-5:1, and specifically may be 1:5, 1:4, 1:3, 1:2, 1:1, 2:1, 3:1, 4:1, and 5:1; the mass ratio may include but not limited to the listed values, and preferably be 1:1. The mass ratio of the selenium-containing substance to the hollow carbon having a nitrogen-doped inner surface is controlled within the aforesaid scope, which is beneficial to the reaction between the selenium-containing and tin-containing substances. Too little selenium-containing substance will result in the insufficient selenylation of the tin-containing substance, while too much selenium-containing substance will result in the failure of the full utilization of the selenium-containing substance.

According to an embodiment of the present invention, in step (5), the high-temperature reaction is performed at a temperature of 100°C-200°C, and specifically 100°C, 110°C, 120°C, 130°C, 140°C, 150°C, 160°C, 170°C, 180°C, 190°C, and 200°C, and preferably 150°C. The reaction temperature is controlled within the aforesaid scope, which is beneficial to the reaction between the sulfur-containing or selenium-containing substance and the tin-containing substance. If it is lower than the temperature, the reaction is incomplete, and if it is higher than the scope, the reaction efficiency is not significantly enhanced.

According to an embodiment of the present invention, the tin-containing substance is at least one of stannous chloride, stannous octoate, stannous acetate, tin tetrachloride, and tin nitrate, and preferably, stannous chloride.

According to an embodiment of the present invention, the sulfur-containing substance is at least one of thiourea, thioacetamide, sodium sulfide, sodium sulfite, and sulfur powder; and preferably, thiourea.

According to an embodiment of the present invention, the selenium-containing substance is at least one of selenium dioxide, selenium chloride, sodium selenite, and selenium powder, and preferably selenium dioxide.

According to a third aspect of the present invention, the present invention further provides a method for preparing a tin-carbon composite material, including the following steps:
(1) adding a zeolitic imidazolate framework material to an aqueous ethanol solution and mixing well, and adding a phenolic resin and mixing well to obtain a mixture A;
(2) performing centrifugal washing on the mixture A with deionized water and drying, then performing high-temperature carbonization under nitrogen, then performing centrifugal washing with deionized water and drying to obtain a hollow carbon having a nitrogen-doped inner surface;
(3) adding the hollow carbon having a nitrogen-doped inner surface obtained in step (2) to an aqueous ethanol solution and mixing well, and adding a tin-containing substance and mixing well to obtain a mixture B; and
(4) adding a sulfur-containing or selenium-containing substance to the mixture B and mixing well, performing a high-temperature reaction, then washing with deionized water and drying to obtain the tin-carbon composite material.

The reaction mechanism of the aforesaid method for preparing the tin-carbon composite material of the present invention is as follows: for a nitrogen-containing zeolitic imidazolate framework material, the element zinc in the zeolitic imidazolate framework material will volatilize at high temperature to form a porous hollow carbon material at the same time, and nitrogen is also doped on the outer surface thereof. The phenolic resin may be wrapped on the surface of the zeolitic imidazolate framework material, and wrapped on the outer surface of the nitrogen-doped hollow carbon after the high-temperature carbonization.

According to an embodiment of the present invention, in step (1), a mass ratio of ethanol in the aqueous ethanol solution to the deionized water is 1:5-5:1, and specifically may be 1:5, 1:4, 1:3, 1:2, 1:1, 2:1, 3:1, 4:1, and 5:1; the mass ratio may include but not limited to the listed values, and preferably be 1:1. The mass ratio of ethanol in the aqueous ethanol solution to the deionized water is controlled within the aforesaid scope, which is beneficial to the dispersion of the zeolitic imidazolate framework material and the dissolving of the phenolic resin; if the mass ratio is beyond the aforesaid scope, it is against the dispersion or dissolving of the aforesaid substances.

According to an embodiment of the present invention, in step (1), a mass ratio of the zeolitic imidazolate framework material to the aqueous ethanol solution is 1:10-1:30, and specifically may be 1:10, 1:15, 1:20, and 1:30; the mass ratio may include but not limited to the listed values, and preferably be 1:10. The mass ratio of the zeolitic imidazolate framework material to the aqueous ethanol solution is controlled within the aforesaid scope, which is beneficial to the dispersion of the zeolitic imidazolate framework material. If the mass ratio is lower than the aforesaid scope, it is against the dispersion; and if it is higher than the aforesaid scope, the efficiency is not enhanced greatly, resulting in the waste of the materials.

According to an embodiment of the present invention, in step (1), a mass ratio of the phenolic resin to the zeolitic imidazolate framework material is 1:1-1:10, and specifically may be 1:1, 1:2, 1:3, 1:4, 1:5, 1:6, 1:7, 1:8, 1:9, and 1:10; the mass ratio may include but not limited to the listed values, and preferably be 1:6. The mass ratio of the phenolic resin to the zeolitic imidazolate framework material is controlled within the aforesaid scope, which facilitates that the phenolic resin is wrapped on the surface of zeolitic imidazolate framework material in a certain thickness. Too small thickness will result in the inadequate strength of the carbon framework, and too large thickness will go against the improvement of the energy density of the negative electrode.

According to an embodiment of the present invention, the zeolitic imidazolate framework material is at least one of ZIF-8 and ZIF-68, and preferably ZIF-8. The element zinc in the two materials of ZIF-8 and ZIF-68 may volatilize within 800-1500°C; and after high temperature, it is easy to form a stable porous hollow carbon material. The advantages of other zeolitic imidazolate framework materials is not good in the aforesaid two aspects.

According to an embodiment of the present invention, the tin-containing substance is at least one of stannous chloride, stannous octoate, stannous acetate, tin tetrachloride, and tin nitrate, and preferably, stannous chloride.

According to an embodiment of the present invention, the sulfur-containing substance is at least one of thiourea, thioacetamide, sodium sulfide, sodium sulfite, and sulfur powder; and preferably, thiourea.

According to an embodiment of the present invention, the selenium-containing substance is at least one of selenium dioxide, selenium chloride, sodium selenite, and selenium powder, and preferably selenium dioxide.

According to an embodiment of the present invention, in step (2), the high-temperature reaction is performed at a temperature of 800°C-1,500°C, and specifically 800°C, 900°C, 1,000°C, 1,100°C, 1,200°C, 1,300°C, 1,400°C, 1,500°C, and preferably 1,100°C. The carbonization temperature is controlled within the aforesaid scope, which is beneficial to the high-temperature carbonization of the phenolic resin and the volatilization of element zinc. If it is lower than the temperature, it is against the volatilization of element zinc; if it is higher than the temperature, it is against the pore formation of the carbon material.

According to an embodiment of the present invention, in step (3), a mass ratio of ethanol in the aqueous ethanol solution to the deionized water is 1:5-5:1, and specifically may be 1:5, 1:4, 1:3, 1:2, 1:1, 2:1, 3:1, 4:1, and 5:1; the mass ratio may include but not limited to the listed values, and preferably be 1:1. The mass ratio of ethanol in the aqueous ethanol solution to the deionized water is controlled within the aforesaid scope, which is beneficial to the dissolving of the water-soluble and alcohol-soluble substances.

According to an embodiment of the present invention, in step (3), a mass ratio of the tin-containing substance to the hollow carbon having a nitrogen-doped inner surface is 1:5-5:1, and specifically may be 1:5, 1:4, 1:3, 1:2, 1:1, 2:1, 3:1, 4:1, and 5:1; the mass ratio may include but not limited to the listed values, and preferably be 1:1. When the mass ratio of the selenium-containing substance to the hollow carbon having a nitrogen-doped inner surface is controlled within the aforesaid scope, the selenium-containing substance may be evenly distributed into the hollow carbon having a nitrogen-doped inner surface, thus enhancing the performance of the material.

According to an embodiment of the present invention, in step (4), a mass ratio of the sulfur-containing substance to the hollow carbon having a nitrogen-doped inner surface is 1:5-5:1, and specifically may be 1:5, 1:4, 1:3, 1:2, 1:1, 2:1, 3:1, 4:1, and 5:1; the mass ratio may include but not limited to the listed values, and preferably be 1:1. The mass ratio of the sulfur-containing substance to the hollow carbon having a nitrogen-doped inner surface is controlled within the aforesaid scope, which is beneficial to the reaction between the sulfur-containing and tin-containing substances. Too little sulfur-containing substance will result in the insufficient sulfidation of the tin-containing substance, while too much sulfur-containing substance will result in the failure of the full utilization of the sulfur-containing substance.

According to an embodiment of the present invention, in step (4), a mass ratio of the selenium-containing substance to the hollow carbon having a nitrogen-doped inner surface is 1:5-5:1, and specifically may be 1:5, 1:4, 1:3, 1:2, 1:1, 2:1, 3:1, 4:1, and 5:1; the mass ratio may include but not limited to the listed values, and preferably be 1:1. The mass ratio of the selenium-containing substance to the hollow carbon having a nitrogen-doped inner surface is controlled within the aforesaid scope, which is beneficial to the reaction between the selenium-containing and tin-containing substances. Too little selenium-containing substance will result in the insufficient selenylation of the tin-containing substance, while too much selenium-containing substance will result in the failure of the full utilization of the selenium-containing substance.

According to an embodiment of the present invention, in step (4), the high-temperature reaction is performed at a temperature of 100°C-200°C, and specifically 100°C, 110°C, 120°C, 130°C, 140°C, 150°C, 160°C, 170°C, 180°C, 190°C, 200°C, and preferably 150°C. The reaction temperature is controlled within the aforesaid scope, which is beneficial to the reaction between the sulfur-containing or selenium-containing and the tin-containing substance. If it is lower than the aforesaid temperature, the reaction is insufficient, and if it is higher than the aforesaid temperature, the reaction efficiency is not significantly enhanced.

According to a fourth aspect of the present invention, the present invention further provides a negative-electrode plate, including a negative-electrode active substance, a binder, and a conductive agent; the negative-electrode active substance is the aforesaid tin-carbon composite material.

The present invention further provides a method for preparing the aforesaid negative-electrode plate, including the following steps: mixing the negative-electrode active substance, the binder, and the conductive agent, in a weight ratio of (92-94):(3-4):(3-4), with a proper amount of deionized water well to obtain a negative-electrode paste; coating the negative-electrode paste onto the negative-electrode current collector, drying and rolling to obtain the negative-electrode plate. The binder is at least one of polyvinyl alcohol, polyacrylic acid, sodium polyacrylate, sodium alginate, butadiene styrene rubber, and sodium carboxymethylcellulose; and the conductive agent is at least one of acetylene black, carbon black, Ketjen black, graphene, carbon nano tube, and carbon nanofiber. The negative-electrode current collector may be a carbon-coated foil material, a metal foil material, or a composite foil material, and other materials, and preferably, aluminum foil.

According to a fifth aspect of the present invention, the present invention further provides a sodium-ion battery, including a positive-electrode plate, a negative-electrode plate, and a separator spaced between the positive-electrode plate and the negative-electrode plate, and the negative-electrode plate is the aforesaid negative-electrode plate.

The present invention further provides a method for preparing the aforesaid sodium-ion battery, including the following steps: stacking the positive-electrode plate, the separator, and the negative-electrode plate in sequence well, or winding to obtain a cell, and placing the cell into a packaging shell, adding an electrolyte solution and packaging, and performing formation, hot and cold pressing, volume determining and other processes, to obtain the sodium-ion battery.

The positive-electrode plate may be manufactured by the following method: a positive-electrode active substance, a conductive agent, a binder, and N-methylpyrrolidone (NMP) are mixed well to obtain a positive-electrode paste. The positive-electrode paste is then coated on a positive-electrode current collector, dried and rolled to obtain the positive-electrode plate. The positive-electrode active substance is at least one of a transition metal oxide, a Prussian-blue compound, and a polyanionic compound; the conductive agent is at least one of a carbon nano tube, acetylene black, Ketjen black, carbon black, graphene, and a carbon nanofiber; the binder is at least one of polyvinylidene fluoride, polyacrylic acid, polyimide, sodium polyacrylate, butadiene styrene rubber, sodium alginate, and nitrile rubber; and the positive-electrode current collector may be a carbon-coated foil material, a metal foil material, or a composite foil material, and other materials, and preferably, aluminum foil.

The separator may be a single or multilayer separator of at least one of glass fiber, polypropylene, polyethylene, non-woven fabric, and polyvinylidene fluoride.

The electrolyte solution includes an organic solvent and an electrolyte sodium salt. Preferably, the organic solvent may be at least one of diethyl carbonate (DEC), methyl ethyl carbonate, propylene carbonate, and ethylene carbonate (EC); the electrolyte sodium salt may be at least one of NaClO₄, Na(CH₃)C₆H₄SO₃, NaSO₃CF₃, NaPF₆, and NaBCl₄.

The present invention will be further specified with reference to the detailed examples below.

### Example 1

The example of the present invention provides a tin-carbon composite material 1, including a tin-based compound 11 and a hollow carbon having a nitrogen-doped inner surface 12; the tin-based compound 11 is evenly distributed inside the hollow carbon having a nitrogen-doped inner surface 12.

This example further provides a method for preparing the aforesaid tin-carbon composite material, including the following specific steps:
(1) ethanol and deionized water were weighed and mixed in a mass ratio of 1:1, mechanically agitated at 200 r/min for 3 min, and added with ethyl orthosilicate, where a mass ratio of the ethyl orthosilicate to the aqueous ethanol solution was 1:10, and mechanically agitated at 1,000 r/min for 20 min, then added with dopamine, where a mass ratio of the dopamine to the ethyl orthosilicate was 1:1, and mechanically agitated at 500 r/min for 20 min; then added with a tris(hydroxymethyl)aminomethane buffer solution, where a mass ratio of tris(hydroxymethyl)aminomethane to the ethyl orthosilicate was 1:20, and mechanically agitated at 500 r/min for 10 h; then added with a phenolic resin, where a mass ratio of the phenolic resin to the ethyl orthosilicate was 1:1, and mechanically agitated at 500 r/min for 30 min; then added with ammonia water, where a mass ratio of the ammonia in the ammonia water to the ethyl orthosilicate was 1:3, and mechanically agitated at 70°C and 500 r/min for 5 h, to obtain a mixture A;
(2) the mixture A was subjected to centrifugal washing with deionized water and dried, and calcined under nitrogen, then head up to 500°C at 5°C/min for heat preservation for 6 h, to obtain a mixture B;
(3) the mixture B was put to a 3 mol/L sodium hydroxide solution for soaking, then subjected to centrifugal washing with deionized water and dried, to obtain a hollow carbon having a nitrogen-doped inner surface;
(4) the hollow carbon having a nitrogen-doped inner surface was added to an aqueous ethanol solution, where ethanol and deionized water were mixed in a mass ratio of 1:1, and a mass ratio of the hollow carbon having a nitrogen-doped inner surface to the aqueous ethanol solution was 1:1, and mechanically agitated at 500 r/min for 20 min, then added with stannous chloride, where the stannous chloride has a mass ratio to the hollow carbon having a nitrogen-doped inner surface of 1:5, and mechanically agitated at 1,000 r/min for 60 min, to obtain a mixture C; and
(5) the mixture C was added with thiourea, where a mass ratio of the thiourea to the hollow carbon having a nitrogen-doped inner surface was 1:5, and mechanically agitated at 1,000 r/min for 60 min, and placed into a high pressure reactor for reaction for 10 h at 100°C, then subjected to centrifugal washing with deionized water and dried, to obtain the tin-carbon composite material.

This example further provides a method for preparing a negative-electrode plate, including the following specific steps: the tin-carbon composite material, sodium polyacrylate, and carbon black, in a weight ratio of 94:3:3, were mixed into a proper amount of deionized water well, to obtain a negative-electrode paste. The negative-electrode paste was then coated on an aluminum foil, dried and rolled to obtain the negative-electrode plate.

This example further provides a method for preparing a positive-electrode plate, including the following specific steps: sodium iron pyrophosphate, **polyvinylidene** fluoride, and carbon black, in a weight ratio of 92:4:4, were mixed into a proper amount of NMP well, to obtain a positive-electrode paste; and then the positive-electrode paste was then coated on a carbon-coated aluminum foil, dried and rolled to obtain the positive-electrode plate.

The present invention further provides a method for preparing a sodium-ion battery, including the following specific steps: a polypropylene film, a negative-electrode plate, and a positive-electrode plate were stacked in sequence well; a cell was placed into a packaging shell, and added with an electrolyte solution (propylene carbonate + NaPF₆) and encapsulated, and subjected to formation, hot and cold pressing, volume determining and other processes, to obtain the sodium-ion battery.

### Example 2

The method for preparing the tin-carbon composite material in this example is different from that in Example 1. Others are the same as those in Example 1 and thus, will be not described any more. This example includes the following specific steps:
(1) ethanol and deionized water were weighed and mixed in a mass ratio of 1:1, mechanically agitated at 200 r/min for 3 min, and added with ethyl orthosilicate, where a mass ratio of the ethyl orthosilicate to the aqueous ethanol solution was 1:10, and mechanically agitated at 1,000 r/min for 20 min, then added with dopamine, where a mass ratio of the dopamine to the ethyl orthosilicate was 1:3, and mechanically agitated at 500 r/min for 20 min; then added with a tris(hydroxymethyl)aminomethane buffer solution, where a mass ratio of tris(hydroxymethyl)aminomethane to the ethyl orthosilicate was 1:30, and mechanically agitated at 500 r/min for 10 h; then added with a phenolic resin, where a mass ratio of the phenolic resin to the ethyl orthosilicate was 1:3, and mechanically agitated at 500 r/min for 30 min; then added with ammonia water, where a mass ratio of ammonia in the ammonia water to the ethyl orthosilicate was 1:5, and mechanically agitated at 70°C and 500 r/min for 5 h, to obtain a mixture A;
(2) the mixture A was subjected to centrifugal washing with deionized water and dried, and calcined under nitrogen, then head up to 600°C at 5°C/min for heat preservation for 6 h, to obtain a mixture B;
(3) the mixture B was put to a 3 mol/L sodium hydroxide solution for soaking, then subjected to centrifugal washing with deionized water and dried, to obtain a hollow carbon having a nitrogen-doped inner surface;
(4) the hollow carbon having a nitrogen-doped inner surface was added to an aqueous ethanol solution, where ethanol and deionized water were mixed in a mass ratio of 1:1, and a mass ratio of the hollow carbon having a nitrogen-doped inner surface to the aqueous ethanol solution was 1:1, and mechanically agitated at 500 r/min for 20 min, then added with stannous chloride, where the stannous chloride has a mass ratio to the hollow carbon having a nitrogen-doped inner surface of 1:3, and mechanically agitated at 1,000 r/min for 60 min, to obtain a mixture C; and
(5) the mixture C was added with thiourea, where a mass ratio of the thiourea to the hollow carbon having a nitrogen-doped inner surface was 1:3, and mechanically agitated at 1,000 r/min for 60 min, and placed into a high pressure reactor for reaction for reaction for 10 h at 120°C, then subjected to centrifugal washing with deionized water and dried, to obtain the tin-carbon composite material.

### Example 3

The method for preparing the tin-carbon composite material in this example is different from that in Example 1. Others are the same as those in Example 1 and thus, will be not described any more. This example includes the following specific steps:
(1) ethanol and deionized water were weighed and mixed in a mass ratio of 1:1, mechanically agitated at 200 r/min for 3 min, and added with ethyl orthosilicate, where a mass ratio of the ethyl orthosilicate to the aqueous ethanol solution was 1:10, and mechanically agitated at 1,000 r/min for 20 min, then added with dopamine, where a mass ratio of the dopamine to the ethyl orthosilicate was 1:5, and mechanically agitated at 500 r/min for 20 min; then added with a tris(hydroxymethyl)aminomethane buffer solution, where a mass ratio of tris(hydroxymethyl)aminomethane to the ethyl orthosilicate was 1:35, and mechanically agitated at 500 r/min for 10 h; then added with a phenolic resin, where a mass ratio of the phenolic resin to the ethyl orthosilicate was 1:5, and mechanically agitated at 500 r/min for 30 min; then added with ammonia water, where a mass ratio of ammonia in the ammonia water to the ethyl orthosilicate was 1:7, and mechanically agitated at 70°C and 500 r/min for 5 h, to obtain a mixture A;
(2) the mixture A was subjected to centrifugal washing with deionized water and dried, calcined under nitrogen, and head up to 700°C at 5°C/min for heat preservation for 6 h, to obtain a mixture B;
(3) the mixture B was put to a 3 mol/L sodium hydroxide solution for soaking, then subjected to centrifugal washing with deionized water and dried, to obtain a hollow carbon having a nitrogen-doped inner surface;
(4) the hollow carbon having a nitrogen-doped inner surface was added to an aqueous ethanol solution, where ethanol and deionized water were mixed in a mass ratio of 1:1, and a mass ratio of the hollow carbon having a nitrogen-doped inner surface to the aqueous ethanol solution was 1:1, and mechanically agitated at 500 r/min for 20 min, then added with stannous chloride, where the stannous chloride has a mass ratio to the hollow carbon having a nitrogen-doped inner surface of 1:1, and mechanically agitated at 1,000 r/min for 60 min, to obtain a mixture C; and
(5) the mixture C was added with thiourea, where a mass ratio of the thiourea to the hollow carbon having a nitrogen-doped inner surface was 1:1, and mechanically agitated at 1,000 r/min for 60 min, and placed into a high pressure reactor for reaction for reaction for 10 h at 150°C, then subjected to centrifugal washing with deionized water and dried, to obtain the tin-carbon composite material.

### Example 4

The method for preparing the tin-carbon composite material in this example is different from that in Example 1. Others are the same as those in Example 1 and thus, will be not described any more. This example includes the following specific steps:
(1) ethanol and deionized water were weighed and mixed in a mass ratio of 1:1, mechanically agitated at 200 r/min for 3 min, and added with ethyl orthosilicate, where a mass ratio of the ethyl orthosilicate to the aqueous ethanol solution was 1:10, and mechanically agitated at 1,000 r/min for 20 min, then added with dopamine, where a mass ratio of the dopamine to the ethyl orthosilicate was 1:7, and mechanically agitated at 500 r/min for 20 min; then added with a tris(hydroxymethyl)aminomethane buffer solution, where a mass ratio of tris(hydroxymethyl)aminomethane to the ethyl orthosilicate was 1:40, and mechanically agitated at 500 r/min for 10 h; then added with a phenolic resin, where a mass ratio of the phenolic resin to the ethyl orthosilicate was 1:7, and mechanically agitated at 500 r/min for 30 min; then added with ammonia water, where a mass ratio of ammonia in the ammonia water to the ethyl orthosilicate was 1:9, and mechanically agitated at 70°C and 500 r/min for 5 h, to obtain a mixture A;
(2) the mixture A was subjected to centrifugal washing with deionized water and dried, calcined under nitrogen, and head up to 800°C at 5°C/min for heat preservation for 6 h, to obtain a mixture B;
(3) the mixture B was put to a 3 mol/L sodium hydroxide solution for soaking, then subjected to centrifugal washing with deionized water and dried, to obtain a hollow carbon having a nitrogen-doped inner surface;
(4) the hollow carbon having a nitrogen-doped inner surface was added to an aqueous ethanol solution, where ethanol and deionized water were mixed in a mass ratio of 1:1, and a mass ratio of the hollow carbon having a nitrogen-doped inner surface to the aqueous ethanol solution was 1:1, and mechanically agitated at 500 r/min for 20 min, then added with stannous chloride, where a mass ratio of the stannous chloride to the hollow carbon having a nitrogen-doped inner surface was 3:1, and mechanically agitated at 1,000 r/min for 60 min, to obtain a mixture C; and
(5) the mixture C was added with thiourea, where a mass ratio of the thiourea to the hollow carbon having a nitrogen-doped inner surface was 1:1, and mechanically agitated at 1,000 r/min for 60 min, and placed into a high pressure reactor for reaction for reaction for 10 h at 180°C, then subjected to centrifugal washing with deionized water and dried, to obtain the tin-carbon composite material.

### Example 5

The method for preparing the tin-carbon composite material in this example is different from that in Example 1. Others are the same as those in Example 1 and thus, will be not described any more. This example includes the following specific steps:
(1) ethanol and deionized water were weighed and mixed in a mass ratio of 1:1, mechanically agitated at 200 r/min for 3 min, and added with ethyl orthosilicate, where a mass ratio of the ethyl orthosilicate to the aqueous ethanol solution was 1:10, and mechanically agitated at 1,000 r/min for 20 min, then added with dopamine, where a mass ratio of the dopamine to the ethyl orthosilicate was 1:10, and mechanically agitated at 500 r/min for 20 min; then added with a tris(hydroxymethyl)aminomethane buffer solution, where a mass ratio of tris(hydroxymethyl)aminomethane to the ethyl orthosilicate was 1:50, and mechanically agitated at 500 r/min for 10 h; then added with a phenolic resin, where a mass ratio of the phenolic resin to the ethyl orthosilicate was 1:10, and mechanically agitated at 500 r/min for 30 min; then added with ammonia water, where a mass ratio of ammonia in the ammonia water to the ethyl orthosilicate was 1:10, and mechanically agitated at 70°C and 500 r/min for 5 h, to obtain a mixture A;
(2) the mixture A was subjected to centrifugal washing with deionized water and dried, calcined under nitrogen, and head up to 1,000°C at 5°C/min for heat preservation for 6 h, to obtain a mixture B;
(3) the mixture B was put to a 3 mol/L sodium hydroxide solution for soaking, then subjected to centrifugal washing with deionized water and dried, to obtain a hollow carbon having a nitrogen-doped inner surface;
(4) the hollow carbon having a nitrogen-doped inner surface was added to an aqueous ethanol solution, where ethanol and deionized water were mixed in a mass ratio of 1:1, and a mass ratio of the hollow carbon having a nitrogen-doped inner surface to the aqueous ethanol solution was 1:1, and mechanically agitated at 500 r/min for 20 min, then added with stannous chloride, where a mass ratio of the stannous chloride to the hollow carbon having a nitrogen-doped inner surface was 5:1, and mechanically agitated at 1,000 r/min for 60 min, to obtain a mixture C; and
(5) the mixture C was added with thiourea, where a mass ratio of the thiourea to the hollow carbon having a nitrogen-doped inner surface was 5:1, and mechanically agitated at 1,000 r/min for 60 min, and placed into a high pressure reactor for reaction for reaction for 10 h at 200°C, then subjected to centrifugal washing with deionized water and dried, to obtain the tin-carbon composite material.

### Example 6

The method for preparing the tin-carbon composite material in this example is different from that in Example 1. Others are the same as those in Example 1 and thus, will be not described any more. This example includes the following specific steps:
(1) ethanol and deionized water were weighed and mixed in a mass ratio of 1:1, mechanically agitated at 200 r/min for 3 min, and added with ZIF-8, where a mass ratio of the ZIF-8 to the aqueous ethanol solution was 1: 10, and mechanically agitated at 1,000 r/min for 20 min, then added with a phenolic resin, where a mass ratio of the phenolic resin to the ZIF-8 was 1:1, and mechanically agitated at 500 r/min for 30 min, to obtain a mixture A;
(2) the mixture A was subjected to centrifugal washing with deionized water and dried, then calcined under nitrogen, heated up to 800°C at 5°C/min for heat preservation for 6 h, and subjected to centrifugal washing with deionized water and dried, to obtain a hollow carbon having a nitrogen-doped inner surface;
(3) the hollow carbon having a nitrogen-doped inner surface obtained in step (2) was added to an aqueous ethanol solution, where ethanol and deionized water were mixed in a mass ratio of 1:1, and a mass ratio of the hollow carbon having a nitrogen-doped inner surface to the aqueous ethanol solution was 1:1, and mechanically agitated at 500 r/min for 20 min, then added with stannous chloride, where a mass ratio of the stannous chloride to the hollow carbon having a nitrogen-doped inner surface was 1:5, and mechanically agitated at 1,000 r/min for 60 min, to obtain a mixture B; and
(4) the mixture B was added with thiourea, where a mass ratio of the thiourea to the hollow carbon having a nitrogen-doped inner surface was 1:5, and mechanically agitated at 1,000 r/min for 60 min, and placed into a high pressure reactor for reaction for 10 h at 100°C, then subjected to centrifugal washing with deionized water and dried, to obtain the tin-carbon composite material.

### Example 7

The method for preparing the tin-carbon composite material in this example is different from that in Example 6. Others are the same as those in Example 6 and thus, will be not described any more. This example includes the following specific steps:
(1) ethanol and deionized water were weighed and mixed in a mass ratio of 1:1, mechanically agitated at 200 r/min for 3 min, and added with ZIF-8, where a mass ratio of the ZIF-8 to the aqueous ethanol solution was 1: 10, and mechanically agitated at 1,000 r/min for 20 min, then added with a phenolic resin, where a mass ratio of the phenolic resin to the ZIF-8 was 1:3, and mechanically agitated at 500 r/min for 30 min, to obtain a mixture A;
(2) the mixture A was subjected to centrifugal washing with deionized water and dried, then calcined under nitrogen, heated up to 950°C at 5°C/min for heat preservation for 6 h, and subjected to centrifugal washing with deionized water and dried, to obtain a hollow carbon having a nitrogen-doped inner surface;
(3) the hollow carbon having a nitrogen-doped inner surface obtained in step (2) was added to an aqueous ethanol solution, where ethanol and deionized water were mixed in a mass ratio of 1:1, and a mass ratio of the hollow carbon having a nitrogen-doped inner surface to the aqueous ethanol solution was 1:1, and mechanically agitated at 500 r/min for 20 min, then added with stannous chloride, where a mass ratio of the stannous chloride to the hollow carbon having a nitrogen-doped inner surface was 1:3, and mechanically agitated at 1,000 r/min for 60 min, to obtain a mixture B; and
(4) the mixture B was added with thiourea, where a mass ratio of the thiourea to the hollow carbon having a nitrogen-doped inner surface was 1:3, and mechanically agitated at 1,000 r/min for 60 min, and placed into a high pressure reactor for reaction for 10 h at 120°C, then subjected to centrifugal washing with deionized water and dried, to obtain the tin-carbon composite material.

### Example 8

The method for preparing the tin-carbon composite material in this example is different from that in Example 6. Others are the same as those in Example 6 and thus, will be not described any more. This example includes the following specific steps:
(1) ethanol and deionized water were weighed and mixed in a mass ratio of 1:1, mechanically agitated at 200 r/min for 3 min, and added with ZIF-8, where a mass ratio of the ZIF-8 to the aqueous ethanol solution was 1: 10, and mechanically agitated at 1,000 r/min for 20 min, then added with a phenolic resin, where a mass ratio of the phenolic resin to the ZIF-8 was 1:6, and mechanically agitated at 500 r/min for 30 min, to obtain a mixture A;
(2) the mixture A was subjected to centrifugal washing with deionized water and dried, then calcined under nitrogen, heated up to 1,100°C at 5°C/min for heat preservation for 6 h, and subjected to centrifugal washing with deionized water and dried, to obtain a hollow carbon having a nitrogen-doped inner surface;
(3) the hollow carbon having a nitrogen-doped inner surface obtained in step (2) was added to an aqueous ethanol solution, where ethanol and deionized water were mixed in a mass ratio of 1:1, and a mass ratio of the hollow carbon having a nitrogen-doped inner surface to the aqueous ethanol solution was 1:1, and mechanically agitated at 500 r/min for 20 min, then added with stannous chloride, where a mass ratio of the stannous chloride to the hollow carbon having a nitrogen-doped inner surface was 1:1, and mechanically agitated at 1,000 r/min for 60 min, to obtain a mixture B; and
(4) the mixture B was added with thiourea, where a mass ratio of the thiourea to the hollow carbon having a nitrogen-doped inner surface was 1:1, and mechanically agitated at 1,000 r/min for 60 min, and placed into a high pressure reactor for reaction for 10 h at 150°C, then subjected to centrifugal washing with deionized water and dried, to obtain the tin-carbon composite material.

### Example 9

The method for preparing the tin-carbon composite material in this example is different from that in Example 6. Others are the same as those in Example 6 and thus, will be not described any more. This example includes the following specific steps:
(1) ethanol and deionized water were weighed and mixed in a mass ratio of 1:1, mechanically agitated at 200 r/min for 3 min, and added with ZIF-8, where a mass ratio of the ZIF-8 to the aqueous ethanol solution was 1: 10, and mechanically agitated at 1,000 r/min for 20 min, then added with a phenolic resin, where a mass ratio of the phenolic resin to the ZIF-8 was 1:8, and mechanically agitated at 500 r/min for 30 min, to obtain a mixture A;
(2) the mixture A was subjected to centrifugal washing with deionized water and dried, then calcined under nitrogen, heated up to 1,300°C at 5°C/min for heat preservation for 6 h, and subjected to centrifugal washing with deionized water and dried, to obtain a hollow carbon having a nitrogen-doped inner surface;
(3) the hollow carbon having a nitrogen-doped inner surface obtained in step (2) was added to an aqueous ethanol solution, where ethanol and deionized water were mixed in a mass ratio of 1:1, and a mass ratio of the hollow carbon having a nitrogen-doped inner surface to the aqueous ethanol solution was 1:1, and mechanically agitated at 500 r/min for 20 min, then added with stannous chloride, where a mass ratio of the stannous chloride to the hollow carbon having a nitrogen-doped inner surface was 3:1, and mechanically agitated at 1,000 r/min for 60 min, to obtain a mixture B; and
(4) the mixture B was added with thiourea, where a mass ratio of the thiourea to the hollow carbon having a nitrogen-doped inner surface was 3:1, and mechanically agitated at 1,000 r/min for 60 min, and placed into a high pressure reactor for reaction for 10 h at 170°C, then subjected to centrifugal washing with deionized water and dried, to obtain the tin-carbon composite material.

### Example 10

The method for preparing the tin-carbon composite material in this example is different from that in Example 6. Others are the same as those in Example 6 and thus, will be not described any more. This example includes the following specific steps:
(1) ethanol and deionized water were weighed and mixed in a mass ratio of 1:1, mechanically agitated at 200 r/min for 3 min, and added with ZIF-8, where a mass ratio of the ZIF-8 to the aqueous ethanol solution was 1: 10, and mechanically agitated at 1,000 r/min for 20 min, then added with a phenolic resin, where a mass ratio of the phenolic resin to the ZIF-8 was 1:10, and mechanically agitated at 500 r/min for 30 min, to obtain a mixture A;
(2) the mixture A was subjected to centrifugal washing with deionized water and dried, then calcined under nitrogen, heated up to 1,500°C at 5°C/min for heat preservation for 6 h, and subjected to centrifugal washing with deionized water and dried, to obtain a hollow carbon having a nitrogen-doped inner surface;
(3) the hollow carbon having a nitrogen-doped inner surface obtained in step (2) was added to an aqueous ethanol solution, where ethanol and deionized water were mixed in a mass ratio of 1:1, and a mass ratio of the hollow carbon having a nitrogen-doped inner surface to the aqueous ethanol solution was 1:1, and mechanically agitated at 500 r/min for 20 min, then added with stannous chloride, where a mass ratio of the stannous chloride to the hollow carbon having a nitrogen-doped inner surface was 5:1, and mechanically agitated at 1,000 r/min for 60 min, to obtain a mixture B; and
(4) the mixture B was added with thiourea, where a mass ratio of the thiourea to the hollow carbon having a nitrogen-doped inner surface was 5:1, and mechanically agitated at 1,000 r/min for 60 min, and placed into a high pressure reactor for reaction for 10 h at 200°C, then subjected to centrifugal washing with deionized water and dried, to obtain the tin-carbon composite material.

### Comparative Example 1

Comparative Example 1 differs from Example 1 and Example 6 in that hard carbon is directly used as a negative-electrode active substance to prepare a negative-electrode plate, including the following specific steps:
hard carbon, sodium polyacrylate, and carbon black were mixed, in a weight ratio of 94:3:3, into a proper amount of deionized water well, to obtain a negative-electrode paste, and the negative-electrode paste was then coated on an aluminum foil, dried and rolled to obtain the negative-electrode plate.

### Comparative Example 2

The method for preparing the tin-carbon composite material in this comparative example is different from that in Example 1. Others are the same as those in Example 1 and thus, will be not described any more. This comparative example includes the following specific steps:
(1) ethanol and deionized water were weighed and mixed in a mass ratio of 1:1, mechanically agitated at 200 r/min for 3 min, and added with ethyl orthosilicate, where a mass ratio of the ethyl orthosilicate to the aqueous ethanol solution was 1:10, and mechanically agitated at 1,000 r/min for 20 min, then added with a phenolic resin, where a mass ratio of the phenolic resin to the ethyl orthosilicate was 1:1, and mechanically agitated at 500 r/min for 30 min; then added with ammonia water, where a mass ratio of ammonia in the ammonia water to the ethyl orthosilicate was 1:3, and mechanically agitated at 70°C and 500 r/min for 5 h, to obtain a mixture A;
(2) the mixture A was subjected to centrifugal washing with deionized water and dried, calcined under nitrogen, and head up to 500°C at 5°C/min for heat preservation for 6 h, to obtain a mixture B;
(3) the mixture B was put to a 3 mol/L sodium hydroxide solution for soaking, then subjected to centrifugal washing with deionized water and dried, to obtain a hollow carbon;
(4) the hollow carbon was added to an aqueous ethanol solution, where ethanol and deionized water were mixed in a mass ratio of 1:1, and a mass ratio of the hollow carbon to the aqueous ethanol solution was 1:1, and mechanically agitated at 500 r/min for 20 min, then added with stannous chloride, where a mass ratio of the stannous chloride to the hollow carbon was 1:5, and mechanically agitated at 1,000 r/min for 60 min, to obtain a mixture C; and
(5) the mixture C was added with thiourea, where a mass ratio of the thiourea to the hollow carbon was 1:5, and mechanically agitated at 1,000 r/min for 60 min, and placed into a high pressure reactor for reaction for 10 h at 100°C, then subjected to centrifugal washing with deionized water and dried, to obtain the tin-carbon composite material.

### Comparative Example 3

The method for preparing the tin-carbon composite material in this Comparative Example 2 is different from that in Example 6. Others are the same as those in Example 6 and thus, will be not described any more. This comparative example includes the following specific steps:
(1) ZIF-8 was calcined under nitrogen, heated up to 950°C at 5°C/min for heat preservation for 6 h, and subjected to centrifugal washing with deionized water and dried, to obtain a nitrogen-doped hollow carbon;
(2) the nitrogen-doped hollow carbon was added to an aqueous ethanol solution, where ethanol and deionized water were mixed in a mass ratio of 1:1, and a mass ratio of the nitrogen-doped hollow carbon to the aqueous ethanol solution was 1:1, and mechanically agitated at 500 r/min for 20 min, then added with stannous chloride, where a mass ratio of the stannous chloride to the nitrogen-doped hollow carbon was 1:3, and mechanically agitated at 1,000 r/min for 60 min, to obtain a mixture B; and
(3) the mixture B was added with thiourea, where a mass ratio of the thiourea to the nitrogen-doped hollow carbon was 1:3, and mechanically agitated at 1,000 r/min for 60 min, and placed into a high pressure reactor for reaction for 10 h at 120°C, then subjected to centrifugal washing with deionized water and dried, to obtain the tin-carbon composite material.

### Tests

(1) Test for the capacity per gram of the negative-electrode active substance:
   a negative-electrode and a fiber separator were placed into a steel shell; after an electrolyte solution (1M NaPF₆, EC:DEC= 1: 1) was dropwisely added, a sodium sheet was placed above the fiber separator, with the addition of a spacer, a spring plate, and steel shell in sequence to prepare a button cell. The button cell was discharged at 25°C to 0 V at 0.01 C, subjected to standing for 5 min, and charged to 2 V at 0.03 C, then subjected to standing for 5 min, which was a charge-discharge cycle at this time. Capacity per gram of the negative-electrode active substance = charging capacity at the 1^{st} cycle/weight of the negative-electrode active substance.
(2) Test for the cycle performance of the sodium-ion battery:
   The sodium-ion battery was charged at 25°C and a constant current of 1 C until the upper limit of the cut-off voltage, and charged to a current of 0.2 C at a constant voltage, and subjected to standing for 5 min, then discharged to the lower limit of the cut-off voltage at a constant current of 1 C, and subjected to standing for 5 min, which was a charge-discharge cycle at this time. The discharge capacity was the initial capacity of the sodium-ion battery this time. The battery was subjected to the tests for 500 times of charge-discharge cycles according to the above steps to obtain the discharge capacity at the 500^{th} cycle. The capacity retention ratio of the sodium-ion battery after 500 times of cycles at 25°C = the discharge capacity at the 500^{th} cycle/the discharge capacity at the 1^{st} cycle × 100%.

Test results of the Examples 1-10 and Comparative Examples 1-3 are shown in Table 1:

**Table 1**

| No. | Capacity per gram of the negative-electrode active substance, mAh/g | Capacity retention ratio at the 500^{th} cycle |
|---|---|---|
| Example 1 | 586.3 | 78 |
| Example 2 | 642.8 | 82 |
| Example 3 | 761.4 | 87 |
| Example 4 | 682.6 | 76 |
| Example 5 | 624.1 | 81 |
| Example 6 | 487.5 | 82 |
| Example 7 | 524.6 | 81 |
| Example 8 | 543.8 | 85 |
| Example 9 | 472.6 | 79 |
| Example 10 | 513.9 | 84 |
| Comparative Example 1 | 315.9 | 83 |
| Comparative Example 2 | 632.5 | 15 |
| Comparative Example 3 | 538.4 | 54 |

As can be seen from the test results of Examples 1-5 and Comparative Example 1 as well as the test results of Examples 6-10 and Comparative Example 1, the tin-carbon composite material of the present invention has an obviously increased capacity per gram, thus increasing the energy density of the sodium-ion battery, as compared to hard carbon. Furthermore, as can be seen from the test results of Examples 1-5 and Comparative Example 2 as well as the test results of Examples 6-10 and Comparative Example 3, when the tin-based compound is distributed into the hollow carbon evenly, the hollow carbon not only effectively inhibits the volume expansion of the tin-based compound, but also avoids the crushing problem of the active substances caused by stress concentration due to uneven dispersion, thereby effectively improving the cycle life of the sodium-ion battery. When the tin-based compound is distributed into and on the surface of the hollow carbon simultaneously, the volume expansion of the tin-based compound on the outer surface of the hollow carbon will cause the crushing of the active substances in the cyclic process of sodium storage and removal, thereby affecting the exertion of the electrochemical performance.

Based on the disclosure and teaching of the aforesaid description, those skilled in the art could further make alterations and amendments to the above embodiments. Therefore, the present invention is not limited to the above detailed embodiments. Any obvious improvement, replacement, or transformation made by those skilled in the art on the basis of the present invention shall fall within the protection scope of the present invention. Moreover, some particular terms are used in the description, but these terms are merely for the convenience of description, but are not construed as limiting the present invention.

## Claims

1. A tin-carbon composite material, comprising a tin-based compound and a hollow carbon having a nitrogen-doped inner surface, wherein the tin-based compound is evenly distributed inside the hollow carbon having a nitrogen-doped inner surface.

2. A method for preparing the tin-carbon composite material according to claim 1, comprising the following steps:
(1) adding ethyl orthosilicate to an aqueous ethanol solution and mixing well, and then adding dopamine, a tris(hydroxymethyl)aminomethane buffer solution, a phenolic resin, and ammonia water in sequence, and mixing well to obtain a mixture A;
(2) performing centrifugal washing on the mixture A obtained in step (1) with deionized water and drying, and then performing high-temperature carbonization under nitrogen to obtain a mixture B;
(3) putting the mixture B to a sodium hydroxide solution for soaking, and performing centrifugal washing with deionized water and drying to obtain a hollow carbon having a nitrogen-doped inner surface;
(4) adding the hollow carbon having a nitrogen-doped inner surface obtained in step (3) to an aqueous ethanol solution and mixing well, and adding a tin-containing substance and mixing well to obtain a mixture C; and
(5) adding a sulfur-containing or selenium-containing substance to the mixture C and mixing well, performing a high-temperature reaction, and then washing with deionized water and drying, to obtain the tin-carbon composite material.

3. The method for preparing the tin-carbon composite material according to claim 2, wherein in step (1), a mass ratio of ethanol in the aqueous ethanol solution to the deionized water is 1:5-5: 1; a mass ratio of the ethyl orthosilicate to the aqueous ethanol solution is 1:10-1:30; a mass ratio of the dopamine to the ethyl orthosilicate is 1:1-1:10; a mass ratio of tris(hydroxymethyl)aminomethane in the tris(hydroxymethyl)aminomethane buffer solution to the ethyl orthosilicate is 1:20-1:50; a mass ratio of the phenolic resin to the ethyl orthosilicate is 1:1-1:10; and a mass ratio of ammonia in the ammonia water to the ethyl orthosilicate is 1:3-1:10.

4. The method for preparing the tin-carbon composite material according to claim 2, wherein in step (2), the high-temperature carbonization is performed at a temperature of 500°C-1000°C.

5. The method for preparing the tin-carbon composite material according to claim 2, wherein in step (4), a mass ratio of ethanol in the aqueous ethanol solution to the deionized water is 1:5-5:1; and a mass ratio of the tin-containing substance to the hollow carbon having a nitrogen-doped inner surface is 1:5-5:1.

6. The method for preparing the tin-carbon composite material according to claim 2, wherein in step (5), a mass ratio of the sulfur-containing substance to the hollow carbon having a nitrogen-doped inner surface is 1:5-5: 1; a mass ratio of the selenium-containing substance to the hollow carbon having a nitrogen-doped inner surface is 1:5-5:1, and the high-temperature reaction is performed at a temperature of 100°C-200°C.

7. The method for preparing the tin-carbon composite material according to claim 2, wherein the tin-containing substance is at least one of stannous chloride, stannous octoate, stannous acetate, tin tetrachloride, and tin nitrate; the sulfur-containing substance is at least one of thiourea, thioacetamide, sodium sulfide, sodium sulfite, and sulfur powder; and the selenium-containing substance is at least one of selenium dioxide, selenium chloride, sodium selenite, and selenium powder.

8. A method for preparing the tin-carbon composite material according to claim 1, comprising the following steps:
(1) adding a zeolitic imidazolate framework material to an aqueous ethanol solution and mixing well, and adding a phenolic resin and mixing well to obtain a mixture A;
(2) performing centrifugal washing on the mixture A with deionized water and drying, then performing high-temperature carbonization under nitrogen, then performing centrifugal washing with deionized water and drying to obtain a hollow carbon having a nitrogen-doped inner surface;
(3) adding the hollow carbon having a nitrogen-doped inner surface obtained in step (2) to an aqueous ethanol solution and mixing well, and adding a tin-containing substance and mixing well to obtain a mixture B; and
(4) adding a sulfur-containing or selenium-containing substance to the mixture B and mixing well, performing a high-temperature reaction, then washing with deionized water and drying to obtain the tin-carbon composite material.

9. The method for preparing the tin-carbon composite material according to claim 8, wherein in step (1), a mass ratio of ethanol in the aqueous ethanol solution to the deionized water is 1:5-5:1; and a mass ratio of the zeolitic imidazolate framework material to the aqueous ethanol solution is 1:10-1:30, and a mass ratio of the phenolic resin to the zeolitic imidazolate framework material is 1:1-1:10.

10. The method for preparing the tin-carbon composite material according to claim 8, wherein the zeolitic imidazolate framework material is least one of ZIF-8 (zeolitic imidazolate framework-8) and ZIF-68 (zeolitic imidazolate framework-68); the tin-containing substance is at least one of stannous chloride, stannous octoate, stannous acetate, tin tetrachloride, and tin nitrate; the sulfur-containing substance is at least one of thiourea, thioacetamide, sodium sulfide, sodium sulfite, and sulfur powder; and the selenium-containing substance is at least one of selenium dioxide, selenium chloride, sodium selenite, and selenium powder.

11. The method for preparing the tin-carbon composite material according to claim 8, wherein in step (2), the high-temperature carbonization is performed at a temperature of 800°C-1,500°C.

12. The method for preparing the tin-carbon composite material according to claim 8, wherein in step (3), a mass ratio of ethanol in the aqueous ethanol solution to the deionized water is 1:5-5:1; and a mass ratio of the tin-containing substance to the hollow carbon having a nitrogen-doped inner surface is 1:5-5:1.

13. The method for preparing the tin-carbon composite material according to claim 8, wherein in step (4), a mass ratio of the sulfur-containing substance to the hollow carbon having a nitrogen-doped inner surface is 1:5-5: 1; a mass ratio of the selenium-containing substance to the hollow carbon having a nitrogen-doped inner surface is 1:5-5:1, and the high-temperature reaction is performed at a temperature of 100°C-200°C.
